# EUROPÄISCHE PATENTANMELDUNG

(11) **EP 1 757 805 A2**
(43) Veröffentlichungstag der Anmeldung: **28.02.2007**
(21) Anmeldenummer: 06119436.1
(22) Anmeldetag: 24.08.2006
(51) Int. Cl.: F03D 1/00

(54) **Verfahren und Vorrichtung zum Installieren von Gründungen von Offshore-Windenergieanlagen**

(30) Priorität: 26.08.2005 DE 102005040674
(71) Anmelder: Ed. Züblin Aktiengesellschaft, D-70567 Stuttgart (DE)
(72) Erfinder: Dr. Weber, Klaus, Stuttgart (DE)

(57) **Zusammenfassung**

Das Verfahren sieht vor, die Gründung einer Offshore-Windenergieanlage, eventuell mitsamt Turm und montierter Windenergieanlage, an Bord einer fahrbaren Tauchinsel vor Ort zu bringen, die Tauchinsel dort durch Fluten von Tanks soweit abzusenken, bis nur noch geringe Teile von ihr aus dem Wasser ragen, wodurch der Widerstand, den sie Wellen gegenüber bietet, stark reduziert ist, und dann die Gründung auf den Meeresboden abzusenken und vollständig zu installieren.

## Beschreibung

### Technisches Gebiet

Die Erfindung betrifft das Installieren von Gründungen für Offshore-Windenergieanlagen.

### Stand der Technik

Gründungen von Offshore-Windenergieanlagen oder deren Komponenten werden auf schwimmenden Plattformen oder auf Schiffen vor Ort gebracht und dort von Kranschiffen übernommen und auf den Meeresboden abgesenkt beziehungswiese installiert.

Die Aufstellung der Gründung und die Installation der Offshore-Windenergieanlage werden generell bei Wellengang stark behindert oder sind bei hohem Seegang nicht möglich. Mit den überlicherweise eingesetzten Schiffen oder Plattformen kann nur bis zu einer signifikanten Welle von 1 bis 1,5 m gearbeitet werden. Dies hat zur Folge, dass die Errichtung von Offshore-Windenergieanlagen lediglich im Sommerhalbjahr und in dieser Zeit auch nur ungefähr an der Hälfte der Tage möglich ist. Somit ergeben sich hohe Ausfallzeiten und Risiken, und die Herstellung der Offshore-Windenergieanlagen verteuert sich enorm. Zudem werden die zur Errichtung einer Offshore-Windenergieanlage notwendigen Teilaufgaben in mehreren voneinander lösgelösten Arbeitsschritten durchgeführt, wodurch sich große logistische Anforderungen ergeben.

### Aufgabe der Erfindung

Es besteht somit die Aufgabe, ein Verfahren und eine Vorrichtung anzugeben, wodurch die Errichtung von Offshore-Windenergieanlagen und deren Gründungen wesentlich vereinfacht wird und auch bei höherem Seegang durchgeführt werden kann. (Ist man zum Beispiel in der Lage, noch bei einer signifikanten Welle von 2 m zu arbeiten, so kann an ungefähr 90% der Tage im Jahr die wirtschaftliche Errichtung der Offshore-Windenergieanlagen durchgeführt werden).

### Darstellung der Erfindung

Die Aufgabe wird durch die im Kennzeichen der Ansprüche 1 und 4 angegebenen Merkmale gelöst.

Wesentliches Merkmal der Erfindung ist hierbei, ein Schiff, beziehungsweise eine schwimmbare Arbeitsplattform zu verwenden, die in der Lage ist, durch Verringerung ihres Auftriebs, zum Beispiel durch Fluten von Tanks, so tief in die unruhige See einzutauchen, daß nur noch Teile der Arbeitsplattform die Meeresoberfläche durchstoßen, ähnlich wie der Turm eines U-Bootes. Dadurch laufen Wellen fast ungehindert über diese "Tauchinsel" hinweg und verringern dadurch den Auftrieb wesentlich.

Auch der seitliche Widerstand, den die Tauchinsel den Wellen entgegensetzt, ist stark verringert. Der wesentliche Effekt ergibt sich aus der starken Reduzierung der Auf- und Abwärtsbewegungen der Tauchinsel. Die Auftriebskräfte, die die Tauchinsel mit kleineren Bereichen ("Türmen") noch über Wasser halten und stabilisieren, sind im Verhältnis zur Masse der Tauchinsel gering. Dies führt zu einer großen Trägheit der Tauchinsel im Wasser, das heißt, die vertikalen Bewegungen der Tauchinsel aufgrund der reduzierten Auftriebskräfte aus dem Seegang werden sehr stark gedämpft, weil eben die vertikale Bewegung der Tauchinsel nur sehr langsam in Gang kommt. Dies ist eine Folge des Newtonschen Gesetzes: Kraft ist Masse mal Beschleunigung F=m • a, also Beschleunigung a=F/m .

Je kleiner also die Auftriebskraft F im Verhältnis zur Masse m der Tauchinsel, um so weniger bewegt sich die Tauchinsel bei Wellengang. Die Auftriebskraft der Tauchinsel sollte also am Aufstellungsort der Windenergieanlage um mehr als 50%, besser mehr als 80%, gegenüber dem Zustand während des Transports dorthin vermindert werden können.

Die Tauchinsel weist auch ein Absenkgerät für die Gründung der Offshore-Windenergieanlage auf. Dies kann im Falle einer Gründung, die einen mastartigen Oberteil aufweist (wie zum Beispiel in der DE 102005006988 beschrieben), ein Gripper, bestehend aus mindestens zwei Greifinstrumenten, sein, der den Mast wechselweise mit einem seiner Greifinstrumente packt, und dieses Greifinstrument dann nach unten fährt, während das andere Greifinstrument des Grippers den Mast durchgleiten läßt, woraufhin dann dieses Greifinstrument den Mast packt, während das andere losläßt und wieder nach oben fährt, um dann dort den Mast erneut zu packen. Dies geschieht im Wechsel, bis die Gründung auf dem Meeresboden aufgesetzt hat. Die ruhige Lage der Tauchinsel im Wasser auch bei stärkerem Seegang gewährleistet dabei das kontrollierte Aufsetzen auf dem Meeresgrund. Alternativ können für das Absenken der Gründung auch Seilwinden zum Einsatz kommen.

Von einer Arbeitsplattform aus, die auf dem unter Wasser liegenden Deck der Tauchinsel aufgeständert ist, können auch die meisten anderen Arbeitsvorgänge ausgeführt werden: Zum Beispiel das Versetzen des Kolkschutzes mit Hilfe von Ladekränen oder eine eventuell vorgesehene Injektion von Gründungsbereichen. Des weiteren sind weitgehend wetterunabhängige Ramm- und Bohrarbeiten zur Herstellung von Pfahlgründungen von der Tauchinsel aus möglich.

Die Tauchinsel weist Platz zum Transport von mindestens einer Gründung auf.

Bei hinreichend großen Tauchinseln kann auch die vollständig im Hafen montierte Gründung inklusive Turm und gesamter Windenergieanlage an den Ort der Aufstellung gebracht und dort aufgebaut werden, wodurch sich erhebliche logistische und wirtschaftliche Vorteile ergeben.

## Patentansprüche

1. Vorrichtung ("Tauchinsel") zum Transport von Gründungen einer oder mehrerer Offshore-Windenergieanlagen oder einer oder mehrerer gesamter Offshore-Windenergieanlagen an den Ort der Aufstellung und zur Installation an diesem Ort, der aus einem schwimmbaren Körper gebildet ist, der aus eigener Kraft oder mit Fremdkraft eines separaten Wasserfahrzeugs durch das Wasser bewegt wird,
**dadurch gekennzeichnet, daß** der schwimmbare Körper mit Mitteln versehen ist, die es gestatten, die Auftriebskraft des schwimmbaren Körpers kontrolliert regelbar um mindestens 50% zu vermindern.

2. Vorrichtung nach Anspruch 1,
**dadurch gekennzeichnet, daß** sie mindestens einen Gripper oder mindestens eine Seilwinde zum langsamen Absenken der Gründung der Windenergieanlage auf den Meeresboden aufweist.

3. Vorrichtung nach mindestens einem der Ansprüche 1 und 2,
**dadurch gekennzeichnet, daß** sie über eine Rammanlage zum Einrammen von Pfählen verfügt.

4. Verfahren zur Installation der Gründung einer Offshore-Windenergieanlage mittels einer Vorrichtung nach mindestens einem der Ansprüche 1 bis 3,
**dadurch gekennzeichnet, daß** die Tauchinsel an der Küste die Gründung oder die gesamte Windenergieanlage an Bord nimmt, oder auf See übernimmt,
anschließend an den Ort der Aufstellung der Anlage verfährt oder verfahren wird, wenn sie sich noch nicht dort befindet,
dort durch Verringerung ihrer Auftriebskraft der überwiegende Teil des zuvor über dem Meeresspiegel befindlichen Bereichs der Tauchinsel unter den Meeresspiegel abgesenkt wird,
daraufhin die Gründung oder gesamte Windenergieanlage mittels eines Grippers oder mindestens einer Seilwinde auf den Meeresgrund abgesenkt wird, oder Gründungspfähle für eine Windenergieanlage gerammt werden,
anschließend notwendige Nacharbeiten erledigt werden,
und dann die Tauchinsel durch Vergrößerung ihrer Auftriebskraft wieder auftaucht und zum nächsten Einsatzort oder zurück zur Küste zur Wiederbeladung verfährt oder durch Fremdkraft eines separaten Wasserfahrzeugs verfahren wird.

5. Verfahren nach Anspruch 4,
**dadurch gekennzeichnet, daß** die Verringerung bzw. die Vergrößerung der Auftriebskraft durch Fluten von luft-/gasgefüllten Tanks mit Wasser bzw. Leerpumpen/Gasbefüllen derselben erfolgt.

6. Verfahren nach mindestens einem der Ansprüche 4 und 5,
**dadurch gekennzeichnet, daß** die Verringerung der Auftriebskraft durch Volumenänderung von luft-/gasgefüllten schrumpf- und expandierbaren Behältern erfolgt.

7. Verfahren nach mindestens einem der Ansprüche 4 bis 6,
**dadurch gekennzeichnet, daß** die Installation des Kolkschutzes von der Tauchinsel aus erfolgt.

8. Verfahren nach mindestens einem der Ansprüche 4 bis 7,
**dadurch gekennzeichnet, daß** Injektionsarbeiten im Meeresgrund von der Tauchinsel aus erfolgen.

9. Verfahren nach mindestens einem der Ansprüche 4 bis 8,
**dadurch gekennzeichnet, daß** weitere Randarbeiten zur vollständigen Installation der gesamten Offshore-Windenergieanlage von der Tauchinsel aus erfolgen.
